(19) Europäisches Patentamt
European Patent Office
Office européen des brevets

(11)  **EP 4 192 776 B1**

(12)  **EUROPEAN PATENT SPECIFICATION**

(45) Date of publication and mention
of the grant of the patent:
**26.11.2025  Bulletin 2025/48**

(21) Application number: **20751521.4**

(22) Date of filing: **04.08.2020**

(51) International Patent Classification (IPC):
**B66B 1/30** $^{(2006.01)}$     **B66B 1/28** $^{(2006.01)}$

(52) Cooperative Patent Classification (CPC):
**B66B 1/30;** B66B 1/285; Y02B 50/00

(86) International application number:
**PCT/EP2020/071867**

(87) International publication number:
**WO 2022/028674 (10.02.2022 Gazette 2022/06)**

(54)  **A DRIVE SYSTEM AND METHOD FOR CONTROLLING A DRIVE SYSTEM**

ANTRIEBSSYSTEM UND VERFAHREN ZUR STEUERUNG EINES ANTRIEBSSYSTEMS

SYSTÈME ET PROCÉDÉ D'ENTRAÎNEMENT PERMETTANT DE COMMANDER UN SYSTÈME D'ENTRAÎNEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.06.2023  Bulletin 2023/24**

(73) Proprietor: **KONE Corporation**
**00330 Helsinki (FI)**

(72) Inventor: **SALOMÄKI, Janne**
**00330 HELSINKI (FI)**

(74) Representative: **Berggren Oy**
**P.O. Box 16**
**Fabianinkatu 21**
**00101 Helsinki (FI)**

(56) References cited:
**EP-A1- 2 522 612     US-A1- 2019 330 016**

**Description**

TECHNICAL FIELD

The invention concerns in general the technical field of drive systems for elevators.

BACKGROUND

Typically, conveyors, such as elevators, comprise a drive system for controlling power feed to an electric motor of the conveyor in order to move a conveying entity, e.g. an elevator car. Moreover, the drive system controls the speed and torque of the electric motor. The drive system may comprise a drive control means and a frequency converter. The drive control means can generate e.g. a speed reference and a torque reference to the frequency converter, which controls the speed of the electric motor according to the speed reference and the torque according to the torque reference.

In a conveyor arrangement or system, the drive control means can be controlled by a control unit of the conveyor device, such as an elevator, and it can comprise for example position control means which defines the speed reference and the torque feedforward for the frequency converter. The final torque reference is a sum of torque feedforward and the speed controller output torque. If torque feedforward is not determined accurately, the speed controller has to correct the torque reference. In this kind of circumstances, e.g. smooth starts of the elevator ride can't be usually achieved.

In order to obtain good ride comfort for an elevator, elevator position or motion control needs tuning. In addition, also some supervisions, e.g. mechanical brake dragging, require that the motion control is tuned properly. Traditionally, the tuning is a complex and time-consuming procedure which includes running the elevator with different loads to different positions. The person carrying out the commissioning procedure must carefully observe the traction sheave movements and sometimes manually release the brake.

This kind of manual tuning procedure requires much expertise from the person carrying out the procedure and time and is also easily prone to errors of the installation and service personnel. For these reasons, there's a need for a solution which is more reliable and less time consuming.

One prior art solution is presented in EP2522612A1 which relates to a method and device for controlling a lift assembly. The method of EP2522612A1 involves providing a servo control reference value for a current controller by a servo control, where the reference value is a function of a measured cabin position, an output measuring signal and servo control parameters, e.g. moment of inertia. The parameters are automatically adjusted during starting and/or operation of a lift system by an error minimizing method i.e. least-squares method. An error between the control reference value and a drive reference value is minimized by the minimizing method during starting and/or operation driving.

SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An objective of the invention is to present a method for determining at least one feedforward control parameter value of an elevator. An objective of the invention is also to present an elevator and an elevator control unit for controlling a drive system for driving an electric motor of an elevator.

The objectives of the invention are reached by an elevator, elevator control unit and a method as defined by the respective independent claims.

According to a first aspect, the invention relates to a method for determining at least one position control feedforward torque parameter value of an elevator, the elevator comprising a drive system for driving an electric motor and an elevator control unit for controlling the drive system. The elevator control unit comprises position control means, and the position control means comprise means for determining position control feedforward torque, which means for determining position control feedforward torque comprises parameter values which relate to the elevator and/or components of the elevator. The method comprises driving at least one elevator test run, measuring and/or determining torque of the motor during the test run, determining based at least in part on the position control feedforward torque and/or the measured and/or determined torque of the motor during the test run at least one of the following position control feedforward torque parameter values of the elevator position control means: a parameter value relating to balance, a parameter value relating to shaft efficiency, a parameter value relating to effective rope and/or car cable mass, a parameter value relating to total non-changing masses.

The elevator test run comprises at least one back and forth run between bottom and top floors, and at least one parameter value is determined based at least in part on the deter-mined torque during the test run or during a part of the test run.

In one embodiment of the invention measured and/or determined torque of the motor during the test run comprises average torque determined between certain predefined phases of the test run.

In one embodiment of the invention measured and/or determined torque of the motor during the test run comprises: average torque determined during constant acceleration when the elevator car is moving upwards and/or average torque determined during constant acceleration when elevator car is moving downwards, and/or average torque determined during constant speed when the elevator car is moving upwards and/or average torque determined during constant speed when the elevator car is moving downwards, and/or average torque determined during constant deceleration when the elevator car is moving upwards and/or average torque determined during constant deceleration when the elevator car is moving downwards.

In one embodiment of the invention elevator car positions are stored at certain phases of the test run for determining average torque between the phases, e.g. such that the elevator car positions are stored in the start and in the end of constant acceleration for determining the average torque during constant acceleration and/or in the start and in the end of constant deceleration for determining the average torque during constant deceleration and/or in the start and in the end of constant speed for determining the average torque during constant speed.

In one embodiment of the invention the method comprises determining the parameter value relating to balance based at least in part on average torque during constant speed upwards and average torque during constant speed downwards, and/or determining the parameter value relating to shaft efficiency based at least in part on average torque during constant speed upwards and average torque during constant speed downwards, and/or determining the parameter value relating to effective rope and/or car cable mass based at least in part on average torque rate per meter during constant speed, and/or determining the parameter value relating to total non-changing masses based at least in part on average torque during constant acceleration, average torque during constant speed, and average torque during constant deceleration.

In one embodiment of the invention a torque feed-forward value of the elevator position control means is determined based at least in part on the determined parameter values.

In one embodiment of the invention the torque feedforward value of the elevator position control means is determined based at least in part on static torque, dynamic torque and friction torque which are based at least in part on the determined parameter values.

According to a second aspect, the invention relates to an elevator control unit for controlling a drive system for driving an electric motor of an elevator, wherein the elevator control unit comprises position control means, and the position control means comprise means for determining position control feedforward torque, which means for determining position control feedforward torque comprises parameter values which relate to the elevator and/or components of the elevator. In the solution of the invention the elevator control unit is configured to control the drive system to drive at least one elevator test run, measure and/or determine torque of the motor during the test run, determine based at least in part on the position control feedforward torque and/or the measured and/or determined torque of the motor during the test run at least one of the following position control feedforward torque parameter values of the elevator position control means: a parameter value relating to balance, a parameter value relating to shaft efficiency, a parameter value relating to effective rope and/or car cable mass, a parameter value relating to total non-changing masses. The elevator test run comprises at least one back and forth run between bottom and top floors, and the elevator control unit and/or the drive system is configured to determine at least one parameter value based at least in part on the determined torque during the test run or during a part of the test run.

According to a third aspect, the invention relates to an elevator comprising an elevator car, an elevator motor configured to move the elevator car, a drive system for driving the elevator motor and an elevator control unit configured to control the elevator and/or the drive system.

With the solution of the invention a fast, reliable and automatic tuning procedure for the position control is enabled which is e.g. easy to use for the installation and/or the service personnel. In one embodiment of the invention only one back and forth run between bottom and top floors is needed to tune the position control parameters.

When the torque feedforward is determined as accurately as possible, the speed controller does not have to correct the torque reference much and this e.g. enables smooth starts. For these reasons also parameters relating to determining torque feedforward have to be tuned properly so that determining torque feedforward accurately is possible.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

BRIEF DESCRIPTION OF FIGURES

The embodiments of the invention are illustrated by way of example, and not by way of limitation, in the figures of the accompanying drawings.

Figure 1 presents one example implementation of torque reference formation for the elevator motor.

Figure 2 presents a simplified structure of one example elevator implementation.

Figure 3 presents speed and torque graphs relating to defining feedforward torque related parameters in an example upward run of an elevator.

Figure 4 presents speed and torque graphs relating to defining feedforward torque related parameters in an example downward run of an elevator.

Figure 5 presents an example method according to the present invention.

DESCRIPTION OF THE EXEMPLIFYING EMBODIMENTS

In one embodiment an elevator comprises a driving machine comprising the electric motor for producing the driving force for moving an elevator car. The drive system is configured to control power feed to the electric motor in order to move the elevator car. Moreover, the drive system is configured to control the speed and/or torque of the electric motor.
The elevator may comprise at least one elevator car as the conveying entity arranged to travel along an elevator shaft between landings for transferring people and/or load. The driving machine of the elevator system may be an elevator hoisting machine comprising the electric motor in order to move the elevator car along the elevator shaft.
In one embodiment of the invention the drive system comprises a drive control means, such as a drive control unit, and a frequency converter. The drive control means can be controlled by e.g. motion control or position control. Drive control means are configured to generate, i.e. define, a speed reference of the electric motor and a torque reference of the electric motor. The speed reference represents the speed of the electric motor as a function of time. The drive control means is configured to provide the generated speed reference of the electric motor and the generated torque reference of the electric motor to the frequency converter. The frequency converter in configured to control the speed of the electric motor according to the speed reference and the torque of the electric motor according to the torque reference. The frequency converter can comprise an internal speed controller. The speed controller may be any type of speed controller comprising one or more adjustable operating parameters. The speed controller may be a proportional-integral (PI) controller.

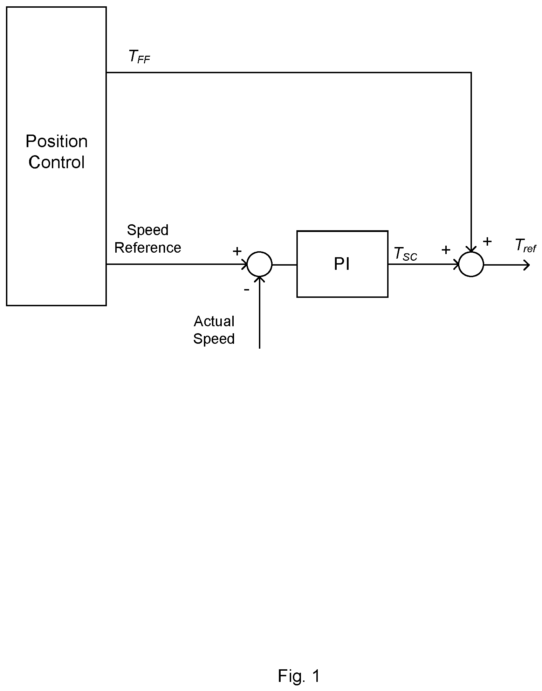

Figure 1 presents one example implementation of torque reference formation for the elevator motor. The position control determines the speed reference and the torque feedforward $T_{FF}$. The final torque reference $T_{ref}$ in this example is a sum of at least torque feedforward and the speed controller output torque $T_{SC}$. It is important that torque feedforward is calculated as accurately as possible, so that the speed controller, such as PI (proportional-integral) controller, does not have to correct the torque reference much. That way smooth movement, e.g. starts, of the elevator car, can be accomplished.
In one embodiment of the invention, the position control can be implemented in a motion control unit or board. In one example it can be e.g. a separate unit or board between elevator main control board and frequency converter. The speed controller can be implemented in the frequency converter. In one embodiment the output of the motion control board or unit is the speed reference and the torque feedforward.
In the solution of the invention the determination of the torque feedforward $T_{FF}$ parameter values can be done by driving at least one elevator test run, measuring and/or determining torque of the motor during the test run, determining based at least in part on the position control feedforward torque and/or the measured and/or determined torque of the motor during the test run at least one of the following position control feedforward torque parameter values of the elevator position control means: a parameter value relating to balance, a parameter value relating to shaft efficiency, a parameter value relating to effective rope and/or car cable mass, a parameter value relating to total non-changing masses.

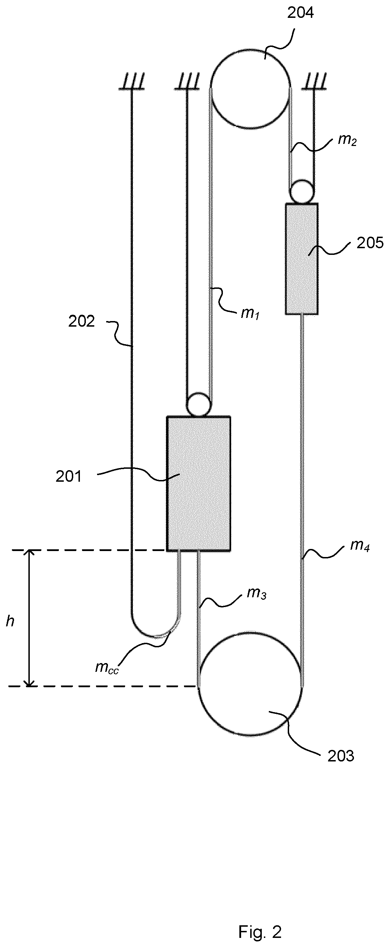

Figure 2 presents a simplified structure of one example elevator implementation, which can be e.g. a high-rise elevator. The example implementation comprises an elevator car 201, a car cable 202, a compensator 203, a traction sheave 204, and a counterweight 205. The rope and car cable masses $m_{cc}$, $m_1$, $m_2$, $m_3$, $m_4$ that are supported by the traction sheave 204 are marked with a double line. The symbols used in the following equations are:

- car and sling mass: $m_{cs}$
- counterweight mass: $m_{cw}$

- load mass: $m_L$
- nominal load: $m_{L,nom}$
- traction sheave radius (or diameter): $r$
- motor and traction sheave inertia $J_m$
- compensator inertia $J_C$
- gravitational acceleration $g$
- rope reeving ratio $i_r$
- shaft height: $H_s$

Total feedforward torque can be a combination of static torque, dynamic torque and friction torque. In the following some examples are presented how static torque, dynamic torque and friction torque can be defined based on elevator system specific constants or operating data which can for example be collected based on a test run.

In one example, elevator balance can be determined in e.g. the middle of the shaft, where the masses are:

$$m_1 = m_2$$

$$m_3 = m_4$$

$$m_L + m_{cs} + m_{cc} = m_{cw}$$

In the balanced situation, the load mass is $m_L = bm_{L,nom}$, , where $b$ is a balance parameter. In the middle of the shaft, the car cable mass can be defined by car cable mass per meter and shaft height. Also the rope masses are proportional to the car position and thus mass of the rope is proportional to compensation rope mass per meter and height of the elevator car.

For defining static torque the torque needed to hold up all masses has to be defined. Based on this and the above, the static torque can be defined as:

$$T_S = \frac{rg}{i_r}\left(m_L - bm_{L,nom}\right) + rg(H_S - 2h)\rho_{tot}$$

The mass per meter values of ropes and car cable can be reduced into one parameter $\rho_{tot}$.

For defining dynamic torque in this example, all moving masses can be reduced to an inertia at the motor shaft. The car cable mass can be neglected. The total inertia is proportional to inertia of the motor and traction sheave, inertia of all the masses, and inertia of the compensator.

The dynamic torque is then proportional to total inertia and acceleration reference of the car, and thus it can defined as:

$$T_D = \frac{(m_L + M_a)ra_{ref}}{i_r}$$

where $M_a$ is the total non-changing masses reduced into one parameter and where $a_{ref}$ is the acceleration reference of the car.

The total non-changing masses $M_a$ relate to at least one of the following: a part of the mass of the car, mass of the sling, mass of the counterweight, mass of the compensator, mass of the machinery and rope masses of the elevator system. In one embodiment the total non-changing masses $M_a$ relate to masses of all previously listed components and this way an accurate feedforward torque determination can be achieved.

For defining the friction torque, it has to be taken into account that there are several kind of mechanical losses in the elevator, such as friction in guide rollers, friction in rope pulleys and air resistance. If all losses are simplified to be a function of car speed, friction torque can be defined in this example as:

$$T_F = (1 - \eta)T_{nom}\frac{v}{v_{nom}}$$

where $\eta$ is shaft efficiency and $T_{nom}$ is the elevator nominal torque. It is defined in this example as

$$T_{nom} = \frac{m_{L,nom}(1-b)rg}{\eta i_r}$$

Based on the above, the total feedforward torque can be defined in this example as:

$$T_{FF} = T_S + T_D + T_F$$

In one embodiment the feedforward torque can be calculated in motion control unit according to previous equation for $T_{FF}$. Based on this the inputs for the feedforward torque determination in one example embodiment can be at least one of the following: load mass $m_L$ (measured e.g. with a scale in the car), car position h, car speed $v$, the speed reference $v_{ref}$, acceleration reference $a_{ref}$.

The parameters, which can e.g be automatically tuned, for the feedforward torque can be for example: radius of the traction sheave (r), rope reeving ratio ($i_r$), balance (b), nominal load ($m_{L,nom}$), shaft height ($H_s$) effective rope and car cable mass ($\rho_{tot}$), total non-changing masses ($M_a$), and/or shaft efficiency ($\eta$).

In one example of the invention an automatic tuning process is configured to determine parameter values for at least one of the following: balance parameter (b), shaft efficiency ($\eta$), mass per meter values of ropes and car cable and total non-changing masses ($M_a$).

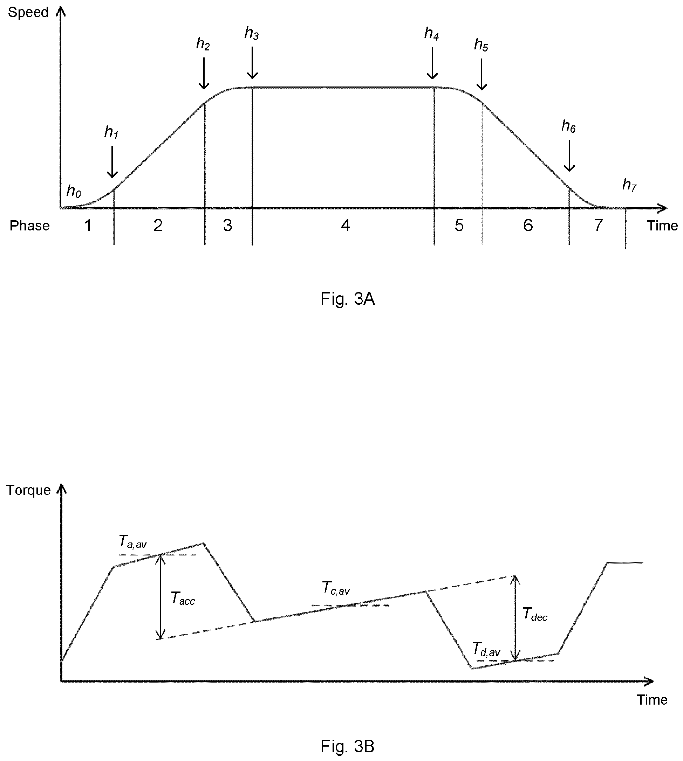

Figures 3A and 3B present speed and torque graphs relating to defining feedforward torque related parameters in an example upward run of an elevator. In case of Figure 3A and 3B the load mass is such that the car side is heavier than the counterweight.

Before the drive of the electric motor is initiated, i.e. when the state of the electric motor and elevator are stationary, the drive control means is configured to define the speed reference of the electric motor. Furthermore, the drive control means is configured to define instants of time, when the state of the electric motor changes based on the defined speed reference. In the example of Figure 3A and 3B, at the instant of time of $h_0$ the speed of the electric motor starts to increase causing that the state of the electric motor changes from the stationary to accelerating at the instant of time of $h_0$. The acceleration may be increasing as illustrated in Figure 3A between the instant of time $h_0$ and the instant of time $h_1$, constant as illustrated in Figure 3A between the instant of time $h_1$ and the instant of time $h_2$, or decreasing as illustrated in Figure 3A between the instant of time $h_2$ and the instant of time $h_3$. At the instant of time of $h_3$ the speed of the electric motor reaches a constant speed causing that the state of the electric motor changes from the accelerating to the constant at the instant of time of $h_3$. At the instant of time of $h_4$ the speed of the electric motor starts to decrease from the constant speed causing that the state of the electric motor changes from the constant to decelerating at the instant of time of $h_4$. The deceleration may be increasing as illustrated in Figure 3A between the instant of time $h_4$ and the instant of time $h_5$, constant as illustrated in Figure 3A between the instant of time $h_5$ and the instant of time $h_6$, or decreasing as illustrated in Figure 3A between the instant of time $h_6$ and the instant of time $h_7$. At the instant of time of $h_7$ the drive of the electric motor stops, i.e. the speed of the electric motor at the instant of time $h_7$ is zero, causing that the state of the electric motor changes from the decelerating to the stationary again at the instant of time of $h_7$.

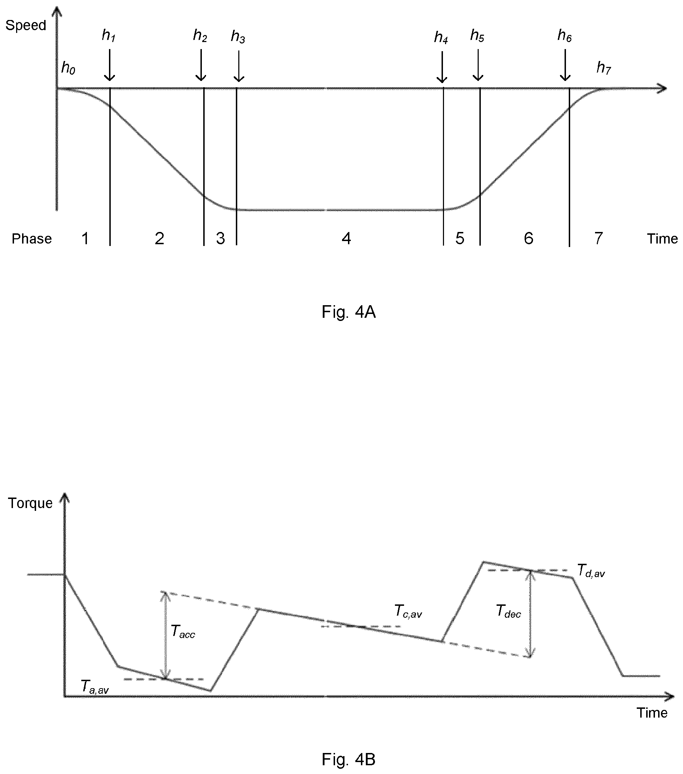

Figures 4A and 4B are otherwise similar presentation as Figures 3A and 3B but they present speed and torque graphs relating to defining feedforward torque related parameters in an example downward run of an elevator.

The following paragraphs present examples of how the parameters can be estimated.

Lift balance calculation estimates how much more weights should be added to the counterweight in order to obtain balance between car and counterweight in the middle of the shaft. The calculation is based on the average motor torque in both run directions as follows:

$$\widehat{m}_b = \frac{T_{up,av} + T_{down,av}}{2rg} i_r$$

where $T_{up,av}$ is the average torque during constant speed upwards and $T_{down,av}$ is the average torque during constant speed downwards.

The balance parameter can be calculated as

$$\hat{b} = \frac{\widehat{m}_b - m_L}{m_{L,nom}}$$

The shaft efficiency can be calculated from the same average torques as the balance estimate. The friction torque is

$$T_{fric} = \frac{T_{up,av} - T_{down,av}}{2}$$

The measured shaft efficiency is

$$\eta = 1 - \frac{T_{fric}}{T_{nom}}$$

Effective rope and car cable mass is estimated based on one run. A torque rate per meter can be defined as

$$\left(\frac{\Delta T}{\Delta h}\right) = \frac{T_n - T_{n-1}}{h_n - h_{n-1}}$$

where $T_n$ is the current motor torque, $T_{n-1}$ is the previous motor torque, $h_n$ is the current position and $h_{n-1}$ is the previous position. The sampling rate in one example embodiment can be e.g around 50 ms.

During constant speed, the average of $\Delta T/\Delta h$ is calculated. After run, the estimate of the effective rope and car cable mass is calculated as

$$\hat{\rho}_{tot} = \left(\frac{\Delta T}{\Delta h}\right)_{av} \frac{1}{2rg}$$

The total non-changing masses can be estimated from average motor torque at different run phases. The car position and the effective rope and car cable mass are taken into account in the calculation.

In the examples of Figures 3A and 3B and Figures 4A and 4B, in one embodiment of the invention, the car positions are stored in the end of phases 1, 2, 5 and 6. The average torque is calculated during constant acceleration $T_{a,av}$, during constant speed $T_{c,av}$, and during constant deceleration $T_{d,av}$.

The middle point of the acceleration is $h_a = (h_1 + h_2)/2$ and the middle point of the deceleration is $h_d = (h_5 + h_6)/2$. The car position at the middle of the run is $h_c = (h_a + h_d)/2$. The acceleration torque is

$$T_{acc} = T_{a,av} - T_{c,av} - (h_a - h_c)\left(\frac{\Delta T}{\Delta h}\right)_{av}$$

The deceleration torque is

$$T_{dec} = T_{d,av} - T_{c,av} - (h_d - h_c)\left(\frac{\Delta T}{\Delta h}\right)_{av}$$

The average torque needed for acceleration and deceleration is

$$T_{ad,av} = \frac{|T_{acc}| + |T_{dec}|}{2}$$

The estimate of total non-changing masses can be calculated based on equation for $T_D$

$$\hat{M}_a = \frac{T_{ad,av} i_r}{r a_{ref}} - m_L$$

In one embodiment of the invention elevator position control can be tuned automatically by running a test run from the bottom floor to the top floor and back. In one embodiment the following parameters can be tuned by using the information obtained during the test runs: balance, shaft efficiency, effective rope and car cable mass and total non-changing masses. When these parameters are tuned correctly this enables smooth starts and stoppings and expected behavior of supervision functions.

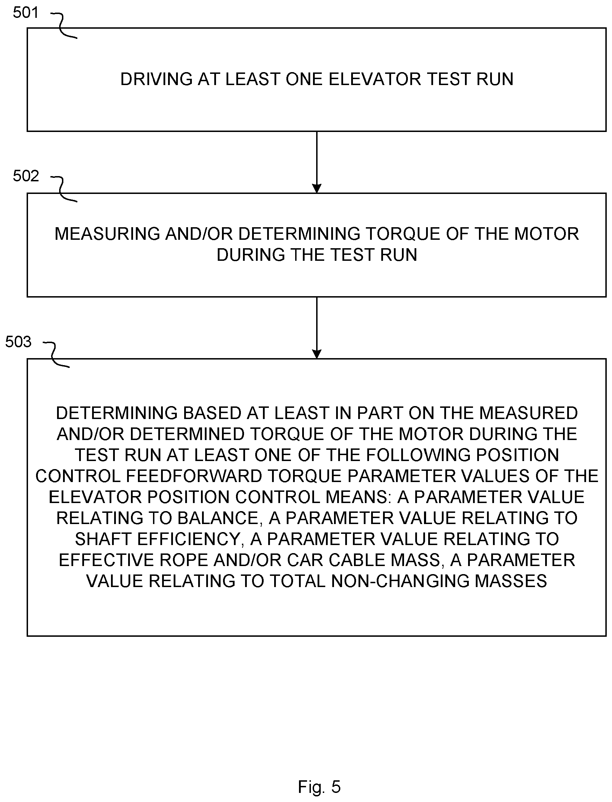

Figure 5 presents an example method according to the present invention. The first step 501 of the method comprises driving at least one elevator test run. Then the second step 502 comprises measuring and/or determining torque of the motor during the test run. The third step 503 of the method comprises determining based at least in part on the measured and/or determined torque of the motor during the test run at least one of the following position control feedforward torque parameter values of the elevator position control means: a parameter value relating to balance, a parameter value relating to shaft efficiency, a parameter value relating to effective rope and/or car cable mass, a parameter value relating to total non-changing masses.

In one embodiment of the invention the drive control means may be a separate unit or may be comprised in or as a part of other units, e.g. the frequency converter and/or in elevator implementations the drive control means may be comprised in or as a part of an elevator control unit. The drive control means may also be arranged in distributed manner at more than two locations or in more than two units. The drive control means may comprise one or more processors, one or more memories being volatile or non-volatile for storing portions of computer program code and any data values, one or more communication interface units and possibly one or more user interface units. The mentioned elements may be communicatively coupled to each other with e.g. an internal bus. The processor may be configured to execute at least some portion of a computer program code stored in the memory causing the processor, and thus the drive control means, to perform desired tasks, e.g. the operations of the drive control means and/or at least some of the method steps described above. The processor may thus be arranged to access the memory and retrieve and store any information therefrom and thereto. For sake of clarity, the processor herein refers to any unit suitable for processing information and control the operation of the drive control unit, among other tasks. The operations may also be implemented with a microcontroller solution with embedded software. Similarly, the memory is not limited to a certain type of memory only, but any memory type suitable for storing the described pieces of information may be applied in the context of the present invention. The communication interface unit provides an interface for communication with any external unit. The communication interface unit may be based on one or more known communication technologies, either wired or wireless, in order to exchange pieces of information. The one or more user interface units may comprise one or more input/output (I/O) devices, such as buttons, keyboard, touch screen, microphone, loudspeaker, display and so on, for receiving input and outputting information.

The specific examples provided in the description given above should not be construed as limiting the applicability and/or the interpretation of the appended claims. Lists and groups of examples provided in the description given above are not exhaustive unless otherwise explicitly stated.

## Claims

1. A method for determining at least one position control feedforward torque parameter value of an elevator, the elevator comprising a drive system for driving an electric motor and an elevator control unit for controlling the drive system,

   wherein the elevator control unit comprises position control means, and the position control means comprise means for determining position control feedforward torque, which means for determining position control feedforward torque comprises parameter values which relate to the elevator and/or components of the elevator, wherein the method comprises:

   - (501) driving at least one elevator test run,
   - (502) measuring and/or determining torque of the motor during the test run,
   - (503) determining based at least in part on the position control feedforward torque and/or the measured and/or determined torque of the motor during the test run at least one of the following position control feedforward torque parameter values of the elevator position control means: a parameter value relating to balance, a parameter value relating to shaft efficiency, a parameter value relating to effective rope and/or car cable mass, a parameter value relating to total non-changing masses,

   wherein the elevator test run comprises at least one back and forth run between bottom and top floors, and at least one parameter value is determined based at least in part on the determined torque during the test run or during a part of the test run.

2. A method according to claim 1, wherein measured and/or determined torque of the motor during the test run comprises average torque determined between certain predefined phases of the test run.

3. A method according to claim 1 or 2, wherein measured and/or determined torque of the motor during the test run comprises:

- average torque determined during constant acceleration when the elevator car is moving upwards and/or average torque determined during constant acceleration when elevator car is moving downwards, and/or
- average torque determined during constant speed when the elevator car is moving upwards and/or average torque determined during constant speed when the elevator car is moving downwards, and/or
- average torque determined during constant deceleration when the elevator car is moving upwards and/or average torque determined during constant deceleration when the elevator car is moving downwards.

4. A method according to any preceding claim, wherein elevator car positions are stored at certain phases of the test run for determining average torque between the phases, e.g. such that the elevator car positions are stored in the start and in the end of constant acceleration for determining the average torque during constant acceleration and/or in the start and in the end of constant deceleration for determining the average torque during constant deceleration and/or in the start and in the end of constant speed for determining the average torque during constant speed.

5. A method according to any preceding claim - wherein the method comprises:

   determining the parameter value relating to balance based at least in part on average torque during constant speed upwards and average torque during constant speed downwards, and/or
   determining the parameter value relating to shaft efficiency based at least in part on average torque during constant speed upwards and average torque during constant speed downwards, and/or
   determining the parameter value relating to effective rope and/or car cable mass based at least in part on average torque rate per meter during constant speed, and/or
   determining the parameter value relating to total non-changing masses based at least in part on average torque during constant acceleration, average torque during constant speed, and average torque during constant deceleration.

6. A method according to any preceding claim, wherein a torque feedforward value of the elevator position control means is determined based at least in part on the determined parameter values.

7. A method according to any preceding claim, wherein the torque feedforward value of the elevator position control means is determined based at least in part on static torque, dynamic torque and friction torque which are based at least in part on the determined parameter values.

8. Elevator control unit for controlling a drive system for driving an electric motor of an elevator, wherein the elevator control unit comprises position control means, and the position control means comprise means for determining position control feedforward torque, which means for determining position control feedforward torque comprises parameter values which relate to the elevator and/or components of the elevator,

   wherein the elevator control unit is configured to:

   - control the drive system to drive at least one elevator test run,
   - measure and/or determine torque of the motor during the test run,
   - determine based at least in part on the position control feedforward torque and/or the measured and/or determined torque of the motor during the test run at least one of the following position control feedforward torque parameter values of the elevator position control means: a parameter value relating to balance, a parameter value relating to shaft efficiency, a parameter value relating to effective rope and/or car cable mass, a parameter value relating to total non-changing masses,

   **characterized in that**
   the elevator test run comprises at least one back and forth run between bottom and top floors, and the elevator control unit and/or the drive system is configured to determine at least one parameter value based at least in part on the determined torque during the test run or during a part of the test run.

9. An elevator control unit according to claim 8, wherein measured and/or determined torque of the motor during the test run comprises average torque which the elevator control unit and/or the drive system is configured to determine between certain predefined phases of the test run.

10. An elevator control unit according to claim 8 or 9, wherein measured and/or determined torque of the motor during the test run comprises:

- average torque determined during constant acceleration when the elevator car is moving upwards and/or average torque determined during constant acceleration when elevator car is moving downwards, and/or
- average torque determined during constant speed when the elevator car is moving upwards and/or average torque determined during constant speed when the elevator car is moving downwards, and/or
- average torque determined during constant deceleration when the elevator car is moving upwards and/or average torque determined during constant deceleration when the elevator car is moving downwards.

11. An elevator control unit according to any claim 8 - 10 wherein the elevator control unit and/or the drive system is configured to store elevator car positions at certain phases of the test run for determining average torque between the phases, e.g. such that the drive system is configured to store the elevator car positions in the start and in the end of constant acceleration for determining the average torque during constant acceleration and/or in the start and in the end of constant deceleration for determining the average torque during constant deceleration and/or in the start and in the end of constant speed for determining the average torque during constant speed.

12. An elevator control unit according to any claim 8 - 11, wherein the elevator control unit and/or the drive system is configured to determine the parameter value relating to balance based at least in part on average torque during constant speed upwards and average torque during constant speed downwards, and/or

the elevator control unit and/or the drive system is configured to determine the parameter value relating to shaft efficiency based at least in part on average torque during constant speed upwards and average torque during constant speed downwards, and/or
the elevator control unit and/or the drive system is configured to determine the parameter value relating to effective rope and/or car cable mass based at least in part on average torque rate per meter during constant speed, and/or
the elevator control unit and/or the drive system is configured to determine the parameter value relating to total non-changing masses based at least in part on average torque during constant acceleration, average torque during constant speed, and average torque during constant deceleration.

13. An elevator control unit according to any claim 8 - 12, wherein the elevator control unit and/or the drive system is configured to determine a torque feedforward value of the elevator position control means based at least in part on the determined parameter values.

14. An elevator control unit according to any claim 8 - 13, wherein the elevator control unit and/or the drive system is configured to determine the torque feedforward value of the elevator position control means based at least in part on static torque, dynamic torque and friction torque which are based at least in part on the determined parameter values.

15. An elevator comprising

an elevator car (201),
an elevator motor configured to move the elevator car,
a drive system for driving the elevator motor,
an elevator control unit configured to control the elevator and/or the drive system,
wherein the elevator control unit is an elevator control unit according to any previous claim 8 - 14.

**Patentansprüche**

1. Verfahren zum Bestimmen mindestens eines Parameterwertes eines Positionssteuerungs-Vorwärtskopplungsdrehmoments eines Aufzugs, wobei der Aufzug ein Antriebssystem zum Antreiben eines Elektromotors und eine Aufzugsteuereinheit zum Steuern des Antriebssystems umfasst,

wobei die Aufzugsteuereinheit Positionssteuermittel umfasst und die Positionssteuermittel ein Mittel zum Bestimmen eines Positionssteuerungs-Vorwärtskopplungsdrehmoments umfassen, wobei das Mittel zum Bestimmen eines Positionssteuerungs-Vorwärtskopplungsdrehmoments Parameterwerte, die sich auf den Aufzug und/oder auf Komponenten des Aufzugs beziehen, umfasst,
wobei das Verfahren Folgendes umfasst:

- (501) Antreiben mindestens eines Aufzugprüflaufs,

- (502) Messen und/oder Bestimmen des Drehmoments des Motors während des Prüflaufs,
- (503) Bestimmen zumindest teilweise auf der Grundlage des Positionssteuerungs-Vorwärtskopplungsdrehmoments und/oder des gemessenen und/oder bestimmten Drehmoments des Motors während des Prüflaufs mindestens eines der folgenden Parameterwerte des Positionssteuerungs-Vorwärtskopplungsdrehmoments der Aufzugpositions-Steuermittel: eines Parameterwertes in Bezug auf das Gleichgewicht, eines Parameterwertes in Bezug auf den Wellenwirkungsgrad, eines Parameterwertes in Bezug auf die wirksame Masse von Seil und/oder Kabinenkabel, eines Parameterwertes in Bezug auf die unveränderlichen Gesamtmassen,

wobei der Aufzugprüflauf mindestens einen Lauf hin und her zwischen den unteren und oberen Etagen umfasst und mindestens ein Parameterwert zumindest teilweise auf der Grundlage des bestimmten Drehmoments während des Prüflaufs oder während eines Abschnitts des Prüflaufs bestimmt wird.

2. Verfahren nach Anspruch 1, wobei das gemessene und/oder bestimmte Drehmoment des Motors während des Prüflaufs ein mittleres Drehmoment, das zwischen bestimmten vorgegebenen Phasen des Prüflaufs bestimmt wird, umfasst.

3. Verfahren nach Anspruch 1 oder 2, wobei das gemessene und/oder bestimmte Drehmoment des Motors während des Prüflaufs Folgendes umfasst:

- ein mittleres Drehmoment, das während einer konstanten Beschleunigung, wenn sich die Aufzugkabine aufwärts bewegt, bestimmt wird, und/oder ein mittleres Drehmoment, das während einer konstanten Beschleunigung, wenn sich die Aufzugkabine abwärts bewegt, bestimmt wird, und/oder
- ein mittleres Drehmoment, das während einer konstanten Geschwindigkeit, wenn sich die Aufzugkabine aufwärts bewegt, bestimmt wird, und/oder ein mittleres Drehmoment, das während einer konstanten Geschwindigkeit, wenn sich die Aufzugkabine abwärts bewegt, bestimmt wird, und/oder
- ein mittleres Drehmoment, das während einer konstanten Verzögerung, wenn sich die Aufzugkabine aufwärts bewegt, bestimmt wird, und/oder ein mittleres Drehmoment, das während einer konstanten Verzögerung, wenn sich die Aufzugkabine abwärts bewegt, bestimmt wird.

4. Verfahren nach einem der vorhergehenden Ansprüche, wobei Aufzugkabinenpositionen in bestimmten Phasen des Prüflaufs zum Bestimmen des mittleren Drehmoments zwischen den Phasen gespeichert werden, z. B. derart, dass die Aufzugkabinenpositionen zum Bestimmen des mittleren Drehmoments während einer konstanten Beschleunigung zu Beginn und am Ende der konstanten Beschleunigung und/oder zum Bestimmen des mittleren Drehmoments während einer konstanten Verzögerung zu Beginn und am Ende der konstanten Verzögerung und/oder zum Bestimmen des mittleren Drehmoments während einer konstanten Geschwindigkeit zu Beginn und am Ende der konstanten Geschwindigkeit gespeichert werden.

5. Verfahren nach einem der vorhergehenden Ansprüche, wobei das Verfahren Folgendes umfasst:

Bestimmen des Parameterwertes in Bezug auf das Gleichgewicht zumindest teilweise auf der Grundlage des mittleren Drehmoments während einer konstanten Aufwärtsgeschwindigkeit und des mittleren Drehmoments während einer konstanten Abwärtsgeschwindigkeit, und/oder
Bestimmen des Parameterwertes in Bezug auf den Wellenwirkungsgrad zumindest teilweise auf der Grundlage des mittleren Drehmoments während einer konstanten Aufwärtsgeschwindigkeit und des mittleren Drehmoments während einer konstanten Abwärtsgeschwindigkeit und/oder Bestimmen des Parameterwertes in Bezug auf die wirksame Masse von Seil und/oder Kabinenkabel zumindest teilweise auf der Grundlage einer mittleren Drehmomentrate pro Meter während einer konstanten Geschwindigkeit und/oder
Bestimmen des Parameterwertes in Bezug auf die unveränderlichen Gesamtmassen zumindest teilweise auf der Grundlage des mittleren Drehmoments während einer konstanten Beschleunigung, des mittleren Drehmoments während einer konstanten Geschwindigkeit und des mittleren Drehmoments während einer konstanten Verzögerung.

6. Verfahren nach einem der vorhergehenden Ansprüche, wobei ein Drehmoment-Vorwärtskopplungswert der Aufzugpositions-Steuermittel zumindest teilweise auf der Grundlage der bestimmten Parameterwerte bestimmt wird.

7. Verfahren nach einem der vorhergehenden Ansprüche, wobei der Drehmoment-Vorwärtskopplungswert der Aufzugpositions-Steuermittel zumindest teilweise auf der Grundlage eines statischen Drehmoments, eines dynamischen Drehmoments und eines Reibungsdrehmoments bestimmt wird, die zumindest teilweise auf den bestimmten Parameterwerten beruhen.

8. Aufzugsteuereinheit zum Steuern eines Antriebssystems zum Antreiben eines Elektromotors eines Aufzugs, wobei die Aufzugsteuereinheit Positionssteuermittel umfasst und die Positionssteuermittel ein Mittel zum Bestimmen eines Positionssteuerungs-Vorwärtskopplungsdrehmoments umfassen, wobei das Mittel zum Bestimmen eines Positionssteuerungs-Vorwärtskopplungsdrehmoments Parameterwerte, die sich auf den Aufzug und/oder auf Komponenten des Aufzugs beziehen, umfasst,

wobei die Aufzugsteuereinheit konfiguriert ist zum:

- Steuern des Antriebssystems, mindestens einen Aufzugprüflauf anzutreiben,
- Messen und/oder Bestimmen eines Drehmoments des Motors während des Prüflaufs,
- Bestimmen zumindest teilweise auf der Grundlage des Positionssteuerungs-Vorwärtskopplungsdrehmoments und/oder des gemessenen und/oder bestimmten Drehmoments des Motors während des Prüflaufs mindestens eines der folgenden Parameterwerte des Positionssteuerungs-Vorwärtskopplungsdrehmoments der Aufzugpositions-Steuermittel: eines Parameterwertes in Bezug auf das Gleichgewicht, eines Parameterwertes in Bezug auf den Wellenwirkungsgrad, eines Parameterwertes in Bezug auf die wirksame Masse von Seil und/oder Kabinenkabel, eines Parameterwertes in Bezug auf die unveränderlichen Gesamtmassen,

**dadurch gekennzeichnet, dass**
der Aufzugprüflauf mindestens einen Lauf hin und her zwischen den unteren und oberen Etagen umfasst und die Aufzugsteuereinheit und/oder das Antriebssystem konfiguriert sind, mindestens einen Parameterwert zumindest teilweise auf der Grundlage des bestimmten Drehmoments während des Prüflaufs oder während eines Abschnitts des Prüflaufs zu bestimmen.

9. Aufzugsteuereinheit nach Anspruch 8, wobei das gemessene und/oder bestimmte Drehmoment des Motors während des Prüflaufs ein mittleres Drehmoment umfasst, wobei die Aufzugsteuereinheit und/oder das Antriebssystem konfiguriert sind, dieses zwischen bestimmten vorgegebenen Phasen des Prüflaufs zu bestimmen.

10. Aufzugsteuereinheit nach Anspruch 8 oder 9, wobei das gemessene und/oder bestimmte Drehmoment des Motors während des Prüflaufs Folgendes umfasst:

- ein mittleres Drehmoment, das während einer konstanten Beschleunigung, wenn sich die Aufzugkabine aufwärts bewegt, bestimmt wird, und/oder ein mittleres Drehmoment, das während einer konstanten Beschleunigung, wenn sich die Aufzugkabine abwärts bewegt, bestimmt wird, und/oder
- ein mittleres Drehmoment, das während einer konstanten Geschwindigkeit, wenn sich die Aufzugkabine aufwärts bewegt, bestimmt wird, und/oder ein mittleres Drehmoment, das während einer konstanten Geschwindigkeit, wenn sich die Aufzugkabine abwärts bewegt, bestimmt wird, und/oder
- ein mittleres Drehmoment, das während einer konstanten Verzögerung, wenn sich die Aufzugkabine aufwärts bewegt, bestimmt wird, und/oder ein mittleres Drehmoment, das während einer konstanten Verzögerung, wenn sich die Aufzugkabine abwärts bewegt, bestimmt wird.

11. Aufzugsteuereinheit nach einem der Ansprüche 8-10, wobei die Aufzugsteuereinheit und/oder das Antriebssystem konfiguriert sind, Aufzugkabinenpositionen in bestimmten Phasen des Prüflaufs zum Bestimmen des mittleren Drehmoments zwischen den Phasen zu speichern, z. B. derart, dass das Antriebssystem konfiguriert ist, die Aufzugkabinenpositionen zum Bestimmen des mittleren Drehmoments während einer konstanten Beschleunigung zu Beginn und am Ende der konstanten Beschleunigung und/oder zum Bestimmen des mittleren Drehmoments während einer konstanten Verzögerung zu Beginn und am Ende der konstanten Verzögerung und/oder zum Bestimmen des mittleren Drehmoments während einer konstanten Geschwindigkeit zu Beginn und am Ende der konstanten Geschwindigkeit zu speichern.

12. Aufzugsteuereinheit nach einem der Ansprüche 8-11, wobei die Aufzugsteuereinheit und/oder das Antriebssystem konfiguriert sind, den Parameterwert in Bezug auf das Gleichgewicht zumindest teilweise auf der Grundlage des mittleren Drehmoments während einer konstanten Aufwärtsgeschwindigkeit und des mittleren Drehmoments während einer konstanten Abwärtsgeschwindigkeit zu bestimmen, und/oder die Aufzugsteuereinheit und/oder das Antriebssystem konfiguriert sind, den Parameterwert in Bezug auf den Wellenwirkungsgrad zumindest teilweise auf der Grundlage des mittleren Drehmoments während einer konstanten Aufwärtsgeschwindigkeit und des mittleren Drehmoments während einer konstanten Abwärtsgeschwindigkeit zu bestimmen, und/oder

die Aufzugsteuereinheit und/oder das Antriebssystem konfiguriert sind, den Parameterwert in Bezug auf die wirksame Masse von Seil und/oder Kabinenkabel zumindest teilweise auf der Grundlage der mittleren Drehmomentrate pro Meter während einer konstanten Geschwindigkeit zu bestimmen, und/oder

die Aufzugsteuereinheit und/oder das Antriebssystem konfiguriert sind, den Parameterwert in Bezug auf die unveränderlichen Gesamtmassen zumindest teilweise auf der Grundlage des mittleren Drehmoments während einer konstanten Beschleunigung, des mittleren Drehmoments während einer konstanten Geschwindigkeit und des mittleren Drehmoments während einer konstanten Verzögerung zu bestimmen.

13. Aufzugsteuereinheit nach einem der Ansprüche 8-12, wobei die Aufzugsteuereinheit und/oder das Antriebssystem konfiguriert sind, einen Drehmoment-Vorwärtskopplungswert der Aufzugpositions-Steuermittel zumindest teilweise auf der Grundlage der bestimmten Parameterwerte zu bestimmen.

14. Aufzugsteuereinheit nach einem der Ansprüche 8-13, wobei die Aufzugsteuereinheit und/oder das Antriebssystem konfiguriert sind, den Drehmoment-Vorwärtskopplungswert der Aufzugpositions-Steuermittel zumindest teilweise auf der Grundlage eines statischen Drehmoments, eines dynamischen Drehmoments und eines Reibungsdrehmoments zu bestimmen, die zumindest teilweise auf den bestimmten Parameterwerten beruhen.

15. Aufzug, der Folgendes umfasst

eine Aufzugkabine (201),
einen Aufzugmotor, der konfiguriert ist, die Aufzugkabine zu bewegen,
ein Antriebssystem zum Antreiben des Aufzugmotors,
eine Aufzugsteuereinheit, die konfiguriert ist, den Aufzug und/oder das Antriebssystem zu steuern,
wobei die Aufzugsteuereinheit eine Aufzugsteuereinheit nach einem der vorhergehenden Ansprüche 8-14 ist.

## Revendications

1. Procédé de détermination d'au moins une valeur de paramètre de couple d'action prévisionnelle de commande de position d'un ascenseur, l'ascenseur comprenant un système d'entraînement pour entraîner un moteur électrique et une unité de commande d'ascenseur pour commander le système d'entraînement,

dans lequel l'unité de commande d'ascenseur comprend des moyens de commande de position, et les moyens de commande de position comprennent des moyens pour déterminer le couple d'action prévisionnelle de commande de position, lesdits moyens pour déterminer le couple d'action prévisionnelle de commande de position comprenant des valeurs de paramètres qui se rapportent à l'ascenseur et/ou à des composants de l'ascenseur,
le procédé comprenant :

- (501) exécuter au moins un essai de fonctionnement d'ascenseur,
- (502) mesurer et/ou déterminer le couple du moteur durant l'essai de fonctionnement,
- (503) déterminer sur la base au moins en partie du couple d'action prévisionnelle de commande de position et/ou du couple mesuré et/ou déterminé du moteur pendant l'essai de fonctionnement, au moins une des valeurs suivantes de paramètres de couple d'action prévisionnelle de commande de position des moyens de commande de position de l'ascenseur : une valeur de paramètre relative à l'équilibre, une valeur de paramètre relative au rendement de la gaine, une valeur de paramètre relative à la masse effective des câbles, une valeur de paramètre relative aux masses non variables totales,

dans lequel l'essai de fonctionnement d'ascenseur comprend au moins un essai aller-retour entre les étages inférieur et supérieur, et au moins une valeur de paramètre est déterminée sur la base au moins en partie du couple déterminé pendant l'essai de fonctionnement ou pendant une partie de l'essai de fonctionnement.

2. Procédé selon la revendication 1, dans lequel le couple mesuré et/ou déterminé du moteur pendant l'essai de fonctionnement comprend un couple moyen déterminé entre certaines phases prédéfinies de l'essai de fonctionnement.

3. Procédé selon la revendication 1 ou 2, dans lequel le couple mesuré et/ou déterminé du moteur pendant l'essai de fonctionnement comprend :

  - un couple moyen déterminé lors d'une accélération constante lorsque la cabine d'ascenseur se déplace vers le haut et/ou un couple moyen déterminé lors d'une accélération constante lorsque la cabine d'ascenseur se déplace vers le bas, et/ou
  - un couple moyen déterminé lors d'une vitesse constante lorsque la cabine d'ascenseur se déplace vers le haut et/ou un couple moyen déterminé lors d'une vitesse constante lorsque la cabine d'ascenseur se déplace vers le bas, et/ou
  - un couple moyen déterminé lors d'une décélération constante lorsque la cabine d'ascenseur se déplace vers le haut et/ou un couple moyen déterminé lors d'une décélération constante lorsque la cabine d'ascenseur se déplace vers le bas.

4. Procédé selon l'une quelconque des revendications précédentes, dans lequel les positions de cabine d'ascenseur sont mémorisées à certaines phases de l'essai de fonctionnement pour déterminer le couple moyen entre les phases, par exemple, de telle sorte que les positions de cabine d'ascenseur soient mémorisées au début et à la fin de l'accélération constante pour déterminer le couple moyen pendant l'accélération constante et/ou au début et à la fin de la décélération constante pour déterminer le couple moyen pendant la décélération constante et/ou au début et à la fin de la vitesse constante pour déterminer le couple moyen pendant la vitesse constante.

5. Procédé selon l'une quelconque des revendications précédentes, le procédé comprenant :

  déterminer la valeur de paramètre relative à l'équilibre sur la base au moins en partie du couple moyen lors de la vitesse constante vers le haut et du couple moyen lors de la vitesse constante vers le bas, et/ou
  déterminer la valeur de paramètre relative au rendement de la gaine sur la base au moins en partie du couple moyen lors de la vitesse constante vers le haut et du couple moyen lors de la vitesse constante vers le bas, et/ou
  déterminer la valeur de paramètre relative à la masse effective des câbles sur la base au moins en partie du taux de couple moyen par mètre lors de la vitesse constante, et/ou
  déterminer la valeur de paramètre relative aux masses non variables totales sur la base au moins en partie du couple moyen lors de l'accélération constante, du couple moyen lors de la vitesse constante et du couple moyen lors de la décélération constante.

6. Procédé selon l'une quelconque des revendications précédentes, dans lequel une valeur d'action prévisionnelle de couple des moyens de commande de position de l'ascenseur est déterminée sur la base au moins en partie des valeurs de paramètres déterminées.

7. Procédé selon l'une quelconque des revendications précédentes, dans lequel la valeur d'action prévisionnelle de couple des moyens de commande de position de l'ascenseur est déterminée sur la base au moins en partie d'un couple statique, d'un couple dynamique et d'un couple de friction qui sont basés au moins en partie sur les valeurs de paramètres déterminées.

8. Unité de commande d'ascenseur pour commander un système d'entraînement pour entraîner un moteur électrique d'un ascenseur, l'unité de commande d'ascenseur comprenant des moyens de commande de position, et les moyens de commande de position comprenant des moyens pour déterminer un couple d'action prévisionnelle de commande de position, lesdits moyens pour déterminer le couple d'action prévisionnelle de commande de position comprenant des valeurs de paramètres qui se rapportent à l'ascenseur et/ou à des composants de l'ascenseur,

  l'unité de commande d'ascenseur étant configurée pour :

  - commander le système d'entraînement pour exécuter au moins un essai de fonctionnement d'ascenseur,
  - mesurer et/ou déterminer le couple du moteur durant l'essai de fonctionnement,
  - déterminer sur la base au moins en partie du couple d'action prévisionnelle de commande de position et/ou du couple mesuré et/ou déterminé du moteur pendant l'essai de fonctionnement, au moins une des valeurs suivantes de paramètres de couple d'action prévisionnelle de commande de position des moyens de commande de position de l'ascenseur : une valeur de paramètre relative à l'équilibre, une valeur de paramètre relative au rendement de la gaine, une valeur de paramètre relative à la masse effective des câbles, une valeur de paramètre relative aux masses non variables totales,

**caractérisée en ce que**
l'essai de fonctionnement d'ascenseur comprend au moins un essai aller-retour entre les étages inférieur et supérieur, et l'unité de commande d'ascenseur et/ou le système d'entraînement sont configurés pour déterminer au moins une valeur de paramètre sur la base au moins en partie du couple déterminé pendant l'essai de fonctionnement ou pendant une partie de l'essai de fonctionnement.

9. Unité de commande d'ascenseur selon la revendication 8, dans laquelle le couple mesuré et/ou déterminé du moteur pendant l'essai de fonctionnement comprend un couple moyen que l'unité de commande d'ascenseur et/ou le système d'entraînement sont configurés pour déterminer entre certaines phases prédéfinies de l'essai de fonctionnement.

10. Unité de commande d'ascenseur selon la revendication 8 ou 9, dans laquelle le couple mesuré et/ou déterminé du moteur pendant l'essai de fonctionnement comprend :

- un couple moyen déterminé lors d'une accélération constante lorsque la cabine d'ascenseur se déplace vers le haut et/ou un couple moyen déterminé lors d'une accélération constante lorsque la cabine d'ascenseur se déplace vers le bas, et/ou
- un couple moyen déterminé lors d'une vitesse constante lorsque la cabine d'ascenseur se déplace vers le haut et/ou un couple moyen déterminé lors d'une vitesse constante lorsque la cabine d'ascenseur se déplace vers le bas, et/ou
- un couple moyen déterminé lors d'une décélération constante lorsque la cabine d'ascenseur se déplace vers le haut et/ou un couple moyen déterminé lors d'une décélération constante lorsque la cabine d'ascenseur se déplace vers le bas.

11. Unité de commande d'ascenseur selon l'une quelconque des revendications 8 à 10, l'unité de commande d'ascenseur et/ou le système d'entraînement étant configurés pour mémoriser des positions de cabine d'ascenseur à certaines phases de l'essai de fonctionnement pour déterminer le couple moyen entre les phases, par exemple, de telle sorte que le système d'entraînement soit configuré pour mémoriser les positions de cabine d'ascenseur au début et à la fin de l'accélération constante pour déterminer le couple moyen pendant l'accélération constante et/ou au début et à la fin de la décélération constante pour déterminer le couple moyen pendant la décélération constante et/ou au début et à la fin de la vitesse constante pour déterminer le couple moyen pendant la vitesse constante.

12. Unité de commande d'ascenseur selon l'une quelconque des revendications 8 à 11, l'unité de commande d'ascenseur et/ou le système d'entraînement étant configurés pour déterminer la valeur de paramètre relative à l'équilibre sur la base au moins en partie du couple moyen lors de la vitesse constante vers le haut et du couple moyen lors de la vitesse constante vers le bas, et/ou

l'unité de commande d'ascenseur et/ou le système d'entraînement étant configurés pour déterminer la valeur de paramètre relative au rendement de la gaine sur la base au moins en partie du couple moyen lors de la vitesse constante vers le haut et du couple moyen lors de la vitesse constante vers le bas, et/ou
l'unité de commande d'ascenseur et/ou le système d'entraînement étant configurés pour déterminer la valeur de paramètre relative à la masse effective des câbles sur la base au moins en partie du taux de couple moyen par mètre lors de la vitesse constante, et/ou
l'unité de commande d'ascenseur et/ou le système d'entraînement étant configurés pour déterminer la valeur de paramètre relative aux masses non variables totales sur la base au moins en partie du couple moyen lors de l'accélération constante, du couple moyen lors de la vitesse constante et du couple moyen lors de la décélération constante.

13. Unité de commande d'ascenseur selon l'une quelconque des revendications 8 à 12, l'unité de commande d'ascenseur et/ou le système d'entraînement étant configurés pour déterminer une valeur d'action prévisionnelle de couple des moyens de commande de position de l'ascenseur sur la base au moins en partie des valeurs de paramètres déterminées.

14. Unité de commande d'ascenseur selon l'une quelconque des revendications 8 à 13, l'unité de commande d'ascenseur et/ou le système d'entraînement étant configurés pour déterminer la valeur d'action prévisionnelle de couple des moyens de commande de position de l'ascenseur sur la base au moins en partie d'un couple statique, d'un couple dynamique et d'un couple de friction qui sont basés au moins en partie sur les valeurs de paramètres déterminées.

15. Ascenseur, comprenant

une cabine d'ascenseur (201),
un moteur d'ascenseur configuré pour déplacer la cabine d'ascenseur,
un système d'entraînement pour entraîner le moteur d'ascenseur,
une unité de commande d'ascenseur configurée pour commander l'ascenseur et/ou le système d'entraînement,
dans lequel l'unité de commande d'ascenseur est une unité de commande d'ascenseur selon l'une quelconque des revendications précédentes 8 à 14.

Fig. 1

Fig. 2

Fig. 3A

Fig. 3B

Fig. 4A

Fig. 4B

501

DRIVING AT LEAST ONE ELEVATOR TEST RUN

502

MEASURING AND/OR DETERMINING TORQUE OF THE MOTOR
DURING THE TEST RUN

503

DETERMINING BASED AT LEAST IN PART ON THE MEASURED
AND/OR DETERMINED TORQUE OF THE MOTOR DURING THE
TEST RUN AT LEAST ONE OF THE FOLLOWING POSITION
CONTROL FEEDFORWARD TORQUE PARAMETER VALUES OF THE
ELEVATOR POSITION CONTROL MEANS: A PARAMETER VALUE
RELATING TO BALANCE, A PARAMETER VALUE RELATING TO
SHAFT EFFICIENCY, A PARAMETER VALUE RELATING TO
EFFECTIVE ROPE AND/OR CAR CABLE MASS, A PARAMETER
VALUE RELATING TO TOTAL NON-CHANGING MASSES

Fig. 5

**EP 4 192 776 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2522612 A1